(19) **Europäisches Patentamt** / **European Patent Office** / **Office européen des brevets**

(11) **EP 4 460 389 B1**

(12) **EUROPEAN PATENT SPECIFICATION**

(45) Date of publication and mention
of the grant of the patent:
**04.03.2026   Bulletin 2026/10**

(21) Application number: **23700420.5**

(22) Date of filing: **04.01.2023**

(51) International Patent Classification (IPC):
**B01D 61/36** (2006.01)   **B01D 67/00** (2006.01)
**B01D 69/02** (2006.01)   **B01D 69/12** (2006.01)
**B01D 71/70** (2006.01)   **C02F 1/44** (2023.01)

(52) Cooperative Patent Classification (CPC):
**B01D 69/125; B01D 61/364; B01D 67/0006;
B01D 69/02; B01D 71/70; C02F 1/447;**
B01D 2323/40; B01D 2325/38

(86) International application number:
**PCT/EP2023/050117**

(87) International publication number:
**WO 2023/131622 (13.07.2023 Gazette 2023/28)**

(54) **NANOFILAMENT-COATED MEMBRANES WITH HIERARCHICAL POROUS STRUCTURES, IN PARTICULAR FOR MEMBRANE DISTILLATION, AND METHODS FOR PREPARING THE SAME**

NANOFILAMENTBESCHICHTETE MEMBRANEN MIT HIERARCHISCHEN PORÖSEN STRUKTUREN, INSBESONDERE ZUR MEMBRANDESTILLATION, UND VERFAHREN ZU IHRER HERSTELLUNG

MEMBRANES REVÊTUES DE NANOFILAMENTS DOTÉES DE STRUCTURES POREUSES HIÉRARCHIQUES, EN PARTICULIER POUR LA DISTILLATION MEMBRANAIRE, ET LEURS PROCÉDÉS DE PRÉPARATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **07.01.2022   EP 22150541**

(43) Date of publication of application:
**13.11.2024   Bulletin 2024/46**

(73) Proprietor: **Max-Planck-Gesellschaft zur Förderung der Wissenschaften e.V.
80539 München (DE)**

(72) Inventors:
• **BUTT, Hans-Jürgen
55128 Mainz (DE)**
• **HOU, Youmin
55128 Mainz (DE)**
• **KAPPL, Michael
55128 Mainz (DE)**

(74) Representative: **v. Bezold & Partner Patentanwälte - PartG mbB
Ridlerstraße 57
80339 München (DE)**

(56) References cited:
WO-A1-2013/074040     WO-A1-2019/115806
WO-A1-2020/056508

• **WU MINMIN ET AL: "PPy nanotubes-enabled in-situ heating nanofibrous composite membrane for solar-driven membrane distillation",** SEPARATION AND PURIFICATION TECHNOLOGY, ELSEVIER SCIENCE, AMSTERDAM, NL, vol. 281, 23 October 2021 (2021-10-23), XP086860697, ISSN: 1383-5866, [retrieved on 20211023], DOI: 10.1016/ J.SEPPUR.2021.119995

**(Cont. next page)**

• **LIAO YUAN ET AL:** "Development of robust and superhydrophobic membranes to mitigate membrane scaling and fouling in membrane distillation", JOURNAL OF MEMBRANE SCIENCE, ELSEVIER BV, NL, vol. 601, 11 February 2020 (2020-02-11), XP086083497, ISSN: 0376-7388, [retrieved on 20200211], DOI: 10.1016/J.MEMSCI.2020.117962
• **JUNPING ZHANG ET AL:** "Superoleophobic Coatings with Ultralow Sliding Angles Based on Silicone Nanofilaments", ANGEWANDTE CHEMIE INTERNATIONAL EDITION, vol. 50, no. 29, 11 July 2011 (2011-07-11), pages 6652 - 6656, XP055156687, ISSN: 1433-7851, DOI: 10.1002/anie.201101008
• **ORSOLINI PAOLA ET AL:** "Superhydrophobicity of nanofibrillated cellulose materials through polysiloxane nanofilaments", CELLULOSE, SPRINGER NETHERLANDS, NETHERLANDS, vol. 25, no. 2, 26 December 2017 (2017-12-26), pages 1127 - 1146, XP036430346, ISSN: 0969-0239, [retrieved on 20171226], DOI: 10.1007/S10570-017-1636-8
• **FRANCIS LIJO ET AL:** "Electrospun membranes for membrane distillation: The state of play and recent advances", DESALINATION, ELSEVIER, AMSTERDAM, NL, vol. 526, 3 January 2022 (2022-01-03), XP086933157, ISSN: 0011-9164, [retrieved on 20220103], DOI: 10.1016/J.DESAL.2021.115511
• **RASTEGARPANAH A ET AL:** "Surface treatment of polyethersulfone membranes for applying in desalination by direct contact membrane distillation", DESALINATION, ELSEVIER, AMSTERDAM, NL, vol. 377, 22 September 2015 (2015-09-22), pages 99 - 107, XP029287217, ISSN: 0011-9164, DOI: 10.1016/J.DESAL.2015.09.008

**Description**

Background of the invention

Addressing the problem of water scarcity, which currently affects every continent and some 3 billion people around the world, is one of the greatest challenges in this century. Desalination, which separates fresh water from saline or contaminated water, proves to be one of the most promising methods to ease the pressure on global water shortages. As a hybrid thermal/membrane desalination technology, membrane distillation (MD) has recently gained much attention given its simple separation mechanism operating at low temperatures and pressure (see, e.g., Gonzalez and Suarez (2017), Renewable and Sustainable Energy Reviews 80, 238-259; Ali et al. (2018), Renewable and Sustainable Energy Reviews 81, 1-21; Desmukk et al. (2018), Energy & Environmental Science 11, 1177-1196).

Desalination by the MD process is based on the use of hydrophobic membranes, which contact the heated saline water (normally at 50 to 80 °C) at the feed side. Driven by the temperature difference across the membrane, water evaporates at the membrane-saline interface, diffuses through the pores of the membrane and condenses on the opposite side (normally at ~20 °C). Due to its intrinsic water repellency, the hydrophobic membrane prevents the saline water from passing through while allowing for vapor transport. Thus, it separates the volatile (i.e., water) and nonvolatile species (i.e., salts) in the hot saline. As the MD process operates at much lower hydraulic pressures than reverse osmosis, and requires less complicated components than multiple-effect distillation, it is highly advantageous for small-scale, simple process-designed desalination facilities. MD also allows water recovery from highly concentrated brines, where reverse osmosis would require too high pressures to be practicably feasible. This includes applications apart from desalination, such wastewater treatment for water recovery, removal of key contaminants from aqueous solutions, or recovery of value-added products (Hussain et al. (2021), Emergent Materials; https://doi.org/10.1007/s42247-020-00152-8).

Despite intensive efforts, widespread adoption of MD is still hindered by the lack of durable hydrophobic membranes with a high distillation capacity. Theoretically, distillation flux $J$ of a MD membrane can be expressed as a function of the membrane properties and partial vapor pressure difference ($\Delta p$) across the membrane:

$$ J \sim \frac{\varepsilon \mathcal{D}_{\mathrm{m}}}{\tau \sigma R T \left(1 + \frac{\mathcal{D}_{\mathrm{m}}}{\mathcal{D}_{\mathrm{K}}}\right)} \Delta p \qquad (1) $$

where $\varepsilon$, $\tau$, and $\sigma$ are the membrane porosity, tortuosity, and thickness respectively; R is the universal gas constant; T is the mean membrane temperature; $\mathcal{D}_{\mathrm{m}}$ is the molecular diffusion coefficient of vapor in air; $\mathcal{D}_{\mathrm{K}}$ is the Knudsen diffusion coefficient of vapor inside the membrane. At a fixed temperature, the ratio of the diffusion coefficient ($\mathcal{D}_{\mathrm{m}}/\mathcal{D}_{\mathrm{K}}$) is inversely proportional to the nominal pore diameter ($d_{\mathrm{n}}$) of the membrane. Therefore, a highly porous membrane with large pores will maximize the distillation flux.

Durable MD desalination with a high level of salt rejection necessitates excellent membrane wetting resistance, in order to prevent infiltration of salty water into the membrane. The wetting resistance of a membrane is usually assessed quantitatively by the liquid entry pressure (LEP), which is defined as the minimum required pressure for liquid solution entering the membrane pores. In a simple form based on the Young-Laplace equation, it can be calculated as LEP ~ (-4γ cos $\theta_{\mathrm{Y}}$)/$d_{\mathrm{max}}$, where $d_{\mathrm{max}}$ is the maximum membrane pore diameter, $\gamma$ is liquid surface tension, and $\theta_{\mathrm{Y}}$ is the contact angle of the membrane material. Accordingly, membranes with small pore size, narrow pore size distribution, and low surface energy typically show high LEP and excellent salt rejection.

These requirements of both high distillation flux and LEP for MD membranes pose a critical challenge when designing a membrane - large membrane pore size allows efficient distillation, and yet it inevitably increases the susceptibility to liquid penetration. To ensure stable desalination without risk of wetting, the nominal pore diameters of state-of-the-art membranes are typically less than 0.2 μm, which greatly reduce desalination efficiency. In order to balance the conflicting requirements of distillation flux and LEP, conceptual designs of composite membranes with different pore sizes have been proposed over the past years (Desmukk et al. (2018) ibid; Jiang et al. (2020), ACS Nano 14, 17376-17386, WO2013/074040), but fabrication of such membranes often involve multiple processing steps and use of fluorination agents, which pose environmental risks.

Therefore, to date, it still remains a challenge to produce a scalable polymeric membrane that can simultaneously enhance distillation flux and wetting resistance via a simple processing method.

In view of this situation, a main objective underlying the present invention is the provision of improved means for membrane distillation which overcome or considerably alleviate the drawbacks of the prior art, in particular in that they achieve a higher distillation flux and thermal efficiency of desalination than materials and methods of the prior art, are eco-friendly and can be a manufactured/used in a relatively simple and cost-efficient manner.

This main objective is achieved according to the present invention by providing the nanofilament coated membranes according to claim 1, the method for preparing the same according to claim 6 and the device according to claim 13. Additional aspects and preferred embodiments of the invention are the subject of further claims.

Description of the invention

The present inventors developed a fluorine-free superhydrophobic membrane by coating a thin layer of nanofilament network onto the top of a micro-porous membrane matrix, which combines the advantages of multi-scale porous structures. This hierarchical topography greatly enhances the LEP of the membrane while retaining a high vapor transfer rate. Under standard desalinating conditions, the nanofilament-coated membrane demonstrated 60% higher distillation flux than that of commercial state-of-the-art membranes. Concurrently, the thermal efficiency of desalination was improved from 84% to 93%. Owing to its non-toxic hydrophobic nature and potential for scalable manufacturing, this advanced composite membrane offers an avenue to affordable clean water for the off-grid communities by using low-grade energy.

The nanofilament-coated membrane with hierarchical porous structures according to the present invention comprises

- a microporous polymer support membrane having through-going pores with a nominal pore diameter in the range from 0.2 $\mu$m to 50 $\mu$m, preferably 1 $\mu$m to 10 $\mu$m
- a superhydrophobic fluorine-free nanoporous layer having through-going pores with a nominal pore diameter in the range from 5 nm to 200 nm, preferably 10 nm to 100 nm provided on said support membrane and consisting of a porous network of polysiloxane nanofilaments.

Principally, the microporous polymer support membrane in said nanofilament-coated membrane is not especially limited and may be any microporous polymer membrane known in the art and in particular any microporous polymer membrane which is used for membrane distillation and commercially available. The nominal pore diameter - which may be alternatively denoted as mean pore diameter - may be determined by any method known in the art and, for commercial products, corresponds to the product data provided by the respective supplier. Typically, the pore diameter is determined by means of capillary flow porometry, in particular according to ASTM F316-03(2019): https://www.astm.org/f0316-03r19.html.

More specifically, the microporous support membrane comprises or consists of a polymer which is selected from the group consisting of polyethersulfone (PES), cellulose acetate (CA), polypropylene (PP), polyamide (nylon), polytetrafluoroethylene (PTFE), polyvinyl difluoride (PVDF) or polyethylene (PE).

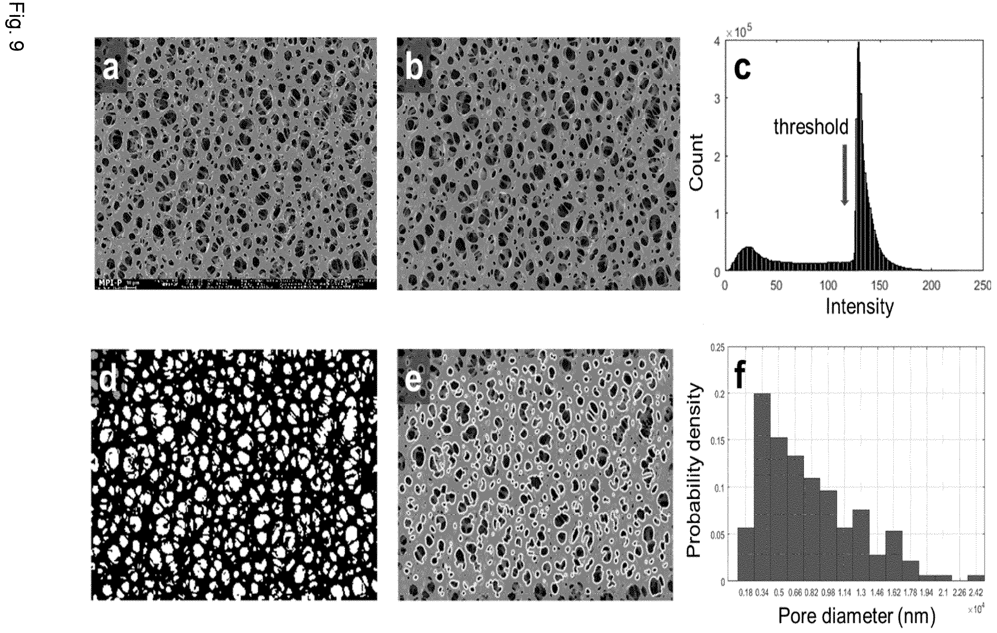

The nominal pore diameter - which may be alternatively denoted as mean pore diameter - of the superhydrophobic fluorine-free nanoporous layer may be determined by any suitable method known in the art. The present inventors used scanning electron microscopy (SEM) and SEM image analysis for this purpose (as detailed in Example 2 and Fig. 9 below).

Typically, the nanofilament-coated membrane of the invention has an apparent receding contact angle $\theta_r^{app}$ for water of more than 150°, measured at room temperature, and a roll off angle of less than 10° even after being immersed in hot water of 80°C for 48 h. The nanofilament-coated membrane of the invention advantageously exhibits a liquid entry pressure LEP of at least 2 bar, preferably at least 5 bar.

A second aspect of the invention relates to methods for preparing the nanofilament-coated porous membrane as described above.

Such a method generally comprises at least the following steps:

- treatment of a microporous polymer membrane with oxygen plasma or by an oxidizing solution, e.g. Fenton's reagent, to activate the polymer surface
- immersion of the microporous polymer membrane in a reaction medium comprising trichloromethylsilane or triethoxysilane and trace amounts of water, i.e. 100 ppm to saturation concentration, in an organic solvent, e.g. toluene or a mixture of n-heptane and toluene or other organic solvents for trichloromethylsilane or triethoxysilane that can accommodate above trace amounts of water
- hydrolysis of trichloromethylsilane or triethoxysilane and generation of silanol functional groups
- formation of polysiloxane nanofilaments on said membrane surface due to condensation reactions of said silanol functional groups with each other and with hydroxyl groups on the membrane surface, and
- self-assembling of polysiloxane nanofilaments resulting in a porous network of said polysiloxane nanofilaments.

In a specific embodiment thereof, the solvent is a mixture of n-heptane and toluene (for example a 1:1 mixture) and the formation and self-assembling of nanofilaments is completed within a predetermined period of time, typically in the range from 10 min to 12 h.

As already indicated above, the nanofilament-coated membrane according to the present invention is especially suited for uses/applications in the field of membrane distillation.

More specifically, the nanofilament-coated membrane may be used in, e.g., a process of desalination of saline or distillation of contaminated water or extraction of water from waste water or extraction of other volatile components from a feed solution.

A closely related aspect of the present invention, therefore, relates to a method for extraction of a volatile component from a feed solution, e.g. a saline aqueous medium, which comprises at least the following steps:

- providing a nanofilament-coated porous membrane as defined above,
- contacting said membrane with a feed solution comprising a volatile component, e.g. saline, at a predetermined elevated temperature resulting in the evaporation and permeation of the volatile component, e.g. water molecules, through said nanofilament-coated porous membrane,
- condensing the permeated molecules at the opposite side of the membrane, wherein the condensation may occur directly into a stream of permeate contacting the membrane or onto a condensing surface having a predetermined low target temperature and being arranged opposite to said nanofilament-coated porous membrane in a predetermined distance, and
- collecting the condensed permeate.

A still further aspect of the present invention relates to a device, in particular a membrane distillation device, comprising the nanofilament-coated porous membrane as defined above.

Principally, the construction of the membrane distillation device according to the present invention is not especially limited and may be based on any membrane distillation system known in the art.

In a specific embodiment, said membrane-distillation device of the invention further comprises at least the following components:

- a supply compartment for receiving an aqueous supply medium with volatile components, e.g. water, and non-volatile compounds, e.g. salts, which is in contact with one surface of the nanofilament-coated porous membrane,
- means for heating and maintaining the medium within the supply compartment at an elevated target temperature,
- a condensing surface maintained at a predetermined target temperature below the temperature of the supply compartment and arranged in a predetermined distance from that surface of the nanofilament-coated porous membrane which is not in contact with the supply compartment,
- means for cooling and maintaining the condensing surface at the target temperature, and
- means for collecting the distillate, i.e. any volatile components of the supply medium which have permeated the nanofilament-coated porous membrane and condensed at the condensing surface.

Brief Description of the Figures

**Fig. 1** shows the morphology of a superhydrophobic hierarchical porous membrane based on a polyethersulfone membrane with nominal pore size of 8 $\mu$m (PES-8): Scanning electron microscopy (SEM) images of pristine PES-8 membrane (A, B) and nanofilament-coated PES-8 membrane (C, D) at different magnifications; (E, F) SEM images showing the cross section of the nanofilament-coated PES-8 membrane with hierarchical porous structures. Arrows in (E) denote the nano-porous outer layer on top of micro-porous membrane.

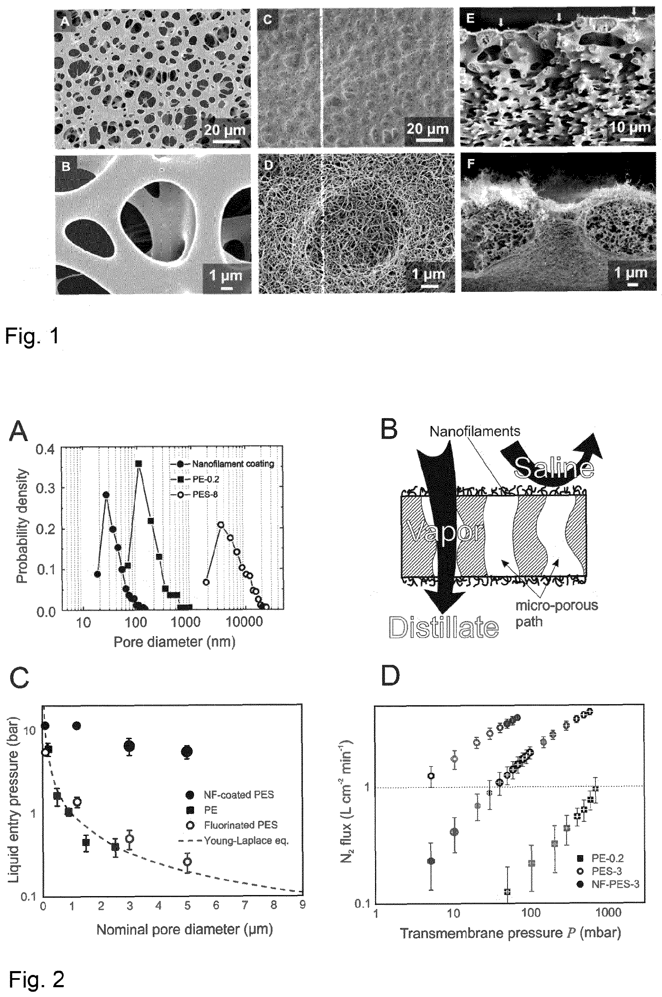

**Fig. 2** shows enhanced LEP and gas permeability resulting from hierarchical membrane topography. (A) Pore size distribution of the nanofilaments coating, pristine PES-8 and PE-0.2 (polyethylene membrane with 0.2 $\mu$m nominal pore size) membranes. (B) Schematic of the nanofilament-coated membrane showing the concurrent enhancement of wetting resistance and vapor permeability. (C) Liquid entry pressure of water as a function of nominal pore diameter for the nanofilament-coated PES, pristine PE, and fluorinated PES membranes. (D) Nitrogen gas permeation flux as a function of transmembrane pressure difference for nanofilament-coated PES-8, pristine PE-0.2, and pristine PES-8 membranes.

**Fig. 3** shows the durability of liquid repellency for the nanofilament-coated membrane. (A) receding contact angle and (B) contact angle hysteresis of water on the PE, PTFE and nanofilament-coated PES membrane surface as a function of immersion time in Milli-Q water at 80°C.

**Fig.4** shows snapshots comparing the mobility of dyed water droplets on the nanofilament-coated PES-8 (C) and PE-0.2 (D) membrane surface before and after 48-hour hot water immersion.

**Fig. 5** schematically shows an exemplary membrane distillation device of the invention. (A) Schematic of an air gap membrane distillation (AGMD) testing system. (B) 3D schematic view of the design of the AGMD module.

**Fig. 6** shows the desalination performance of nanofilament-coated PES-membranes. (A) Experimental steady state distillation flux as a function of distillate conductivity for the nanofilament-coated PES, commercial PE and PTFE membranes. (B) Experimental steady state distillation flux as a function of feed water temperature for NF-PES-8, NF-PES-3 and PE-0.2 membranes.

**Fig. 7** shows a comparison of the energy performance of different membranes in MD testing: Time evolution of thermal efficiency for the NF-PES-8, PE-0.2 and PTFE-0.2 membranes in 12-hour AGMD desalination.

**Fig. 8** shows a comparison of key properties of nanofilament-coated PES membranes (white and patterned symbols) and commercially available membranes (black symbols).

**Fig. 9** illustrates the image analysis of SEM images for a PES-8 membrane to determine pores size distribution. (a) Initial SEM image. (b) denoised SEM image. (c) Histogram of image pixel intensities; arrow denotes the threshold for image binarization. (d) Binary image after the conversion of SEM image. (e) Image showing the detected pores. (f) Statistics of size distribution for the detected pores.

<u>EXAMPLE 1</u>

*Preparation of nanofilament-coated microporous polyethersulfone membranes*

To fabricate a high-performance composite membrane as required by MD desalination, a superhydrophobic nano-porous layer was coated onto a micro-porous polyethersulfone (PES) membrane as follows. This commercially available 130-$\mu$m-thick PES membrane with nominal pore diameter ($d_n$) of 8 $\mu$m (in the following denoted as PES-8) (Fig. 1A, 1B) acts as a robust supporting framework due to its toughness, good thermal resistance, and relatively high porosity (~75 to 80 %). To create the nano-porous layer, the membrane (64 mm $\times$ 75 mm) was immersed in a mixture of n-heptane and toluene (volumetric ratio 1:1), which contains trichloromethylsilane and trace amounts of water (150 ppm). The hydrolyzed trichloromethylsilane in solvent reacted with the hydroxyl groups on the membrane surface and self-assembled into a porous network of polysiloxane nanofilaments. The nanofilaments covered the whole outer surface of the PES membrane, including the large opening pores (Fig. 1C, 1D). The interwoven structure of nanofilaments resulted in an overhanging morphology with an inward curvature. Due to the exposed methyl groups on the surface, the nanofilaments exhibited low surface energy. This combination of overhang structural topography with low surface energy renders the nanofilament network coating stable and superhydrophobic, even without using any fluorine-containing reagents.

<u>Detailed Experimental Procedures</u>

**Fabrication of the nanofilament-coated membranes**

PES membranes, purchased from Sterlitech Corp., USA, were activated by using $O_2$ plasma (2 min, 90W, Diener Electronic Femto). The $O_2$ flow rate was set to 7 ml/min. 0.6 ml of trichloromethylsilane (TCMS) was added to 300 ml of a 1:1 (volumetric) mixture of *n*-heptane and toluene. Before mixing, a trace amount of water was added to n-heptane and toluene. The water concentration of n-heptane and toluene was measured as 90 ppm and 275 ppm, respectively. Then the plasma activated PES membranes were immersed in the reaction solution for nanofilament growth. After 6 hours, the nanofilament-coated PES membranes were rinsed with n-hexane and dried using $N_2$ flow.

**Fluorination of hydrophilic PES membranes**

For comparison, the originally hydrophilic PES membranes were hydrophobized by using surface fluorination with 1H,1H,2H,2H-perfluorodecyltrichlorosilane (PFDTS). PES membranes were activated using $O_2$ plasma treatment (2 min, 90 W, Diener Electronic Femto) at a $O_2$ flow rate of 7 ml/min. Subsequently, PFDTS (180 $\mu$L, Alfa Aesar) was mixed with n-hexane (350 mL) and the activated membranes were immersed in the solution for 60 min, rinsed with n-hexane and dried under a nitrogen gas flow.

EXAMPLE 2

*Characterization of nanofilament-coated microporous PES membranes*

In order to characterize and evaluate the physical properties of the nanofilament-coated porous membranes prepared according to Example 1 above, the commercial polyethylene and polytetrafluoroethylene micro-porous membranes were selected as the benchmarks for comparison and the properties of all tested membranes are indicated in Table 1 below.

Topography

SEM images of cross-sections (Fig. 1E and 1F) elaborated the dual-layer topography of the nanofilament-coated PES membrane with multi-scale pore sizes. The coated nanofilaments spontaneously intertwined and formed a dense nano-porous layer on top of the micro-porous membrane matrix (highlighted by arrows in Fig. 1E). At the same time, the nanofilaments also grew inside the membranes and converted the interior surface into a superhydrophobic surface (Fig. 1F). The inner coating, however, was sufficiently thin so that the geometry of the inner micro-pores remained almost unchanged, offering a high membrane permeability for water vapor transport.

To analyze the effective pore diameter of a nanofilament network coating, the geometrical features were evaluated based on the computer analysis of SEM images (Fig. 2A). The analysis algorithm was first validated through measurements of a pristine PES-8 membrane and a commercial polyethylene membrane with a nominal pore diameter of 0.2 $\mu$m (denoted as PE-0.2). From the image analysis, the obtained mean pore diameters of the PE-0.2 and PES-8 membranes closely matched the product data, confirming the reliability of the measurements.

The pore size and pore size distribution of the nanofilament coating was measured by analyzing the top-down SEM images. The adopted methodology consists of the following steps. First, the image was denoised by means of a standard median filter to remove the salt-pepper image noise. Then, the intensity histogram was calculated and the threshold for identifying the membrane pores shape defined. Next, the image was converted to binary. From these binary images, membrane pores were identified. Finally, the sizes of detected membrane pores was calculated to obtain pore size histograms.

Fig. 9 illustrates the image analysis of SEM images for a PES-8 membrane to determine pores size distribution. (a) Initial SEM image. (b) denoised SEM image. (c) Histogram of image pixel intensities; arrow denotes the threshold for image binarization. (d) Binary image after the conversion of SEM image. (e) Image showing the detected pores. (f) Statistics of size distribution for the detected pores.

The computer image analysis revealed that the pore diameter of the nanofilament coating was distributed between 10 to 100 nm. Compared to the commercial membranes, the nano-porous coating resulted in not only a smaller pore size, but much higher surface roughness, which would substantially increase the liquid entry pressure of coated membranes according to the Young-Laplace equation.

Liquid entry pressure and gas permeability

Desalination performance using the MD process relies essentially on the liquid entry pressure (LEP) and gas permeability of the adopted membrane: the LEP highly affects the salt rejection and the gas permeability dominates the distillate flux. To quantitatively explore the improved wetting resistance of hierarchical membranes, the LEP of nanofilament-coated PES membranes was benchmarked against commercial PE membranes and PES membranes that were rendered hydrophobic by fluorination. The testing was carried out in a custom-made setup which can ramp up the transmembrane pressure difference (see Detailed Experimental Procedures). For convenient description here, NF-PES-0.1 to NF-PES-8 are used to denote the nanofilament-coated PES membranes with nominal pore diameter ($d_n$) ranging from 0.1 to 8 $\mu$m; PE-0.2 to PE-2.5 are used to denote the PE membranes with $d_n$ ranging from 0.2 to 2.5 $\mu$m. For the membranes with single-scale porous geometry (e.g., PE and fluorinated PES membranes), the LEP values drop sharply with the increasing $d_n$ (Fig. 2C), which agrees well with the estimation of the Young-Laplace equation when regarding $d_{max} = d_n$ (due to the low deviation of pore size for commercial membranes). In a practical MD process, the transmembrane pressure difference normally ranges between 0.3 to 1.5 bar according to different operating pressures on the side where permeate is collected. To ensure the sufficient safety margin of LEP, the $d_n$ of MD membranes in pilot scale testing is typically between 0.1 and 0.5 $\mu$m.

The present inventors found a greatly enhanced LEP for nanofilament-coated PES membranes, as the nano-porous outer layer withstands high capillary pressure. Note that NF-PES-0.1 and NF-PES-1.2 membranes exhibited an extremely high LEP, which even exceeded the limit of our testing setup (11.5 bar). However, when the pore size of PES membranes is considerably larger (e.g., $d_n > 3$ $\mu$m), the LEP of the nanofilament-coated membrane gradually goes down with the increasing pore size of matrix. The decline of LEP can be related to the imperfect growth of the nano-porous layer on the big membrane pores as it is difficult to cover the large openings completely with a nanofilament network. Nevertheless, the effective pore diameter of the NF-PES-3, NF-PES-5, and NF-PES-8 membranes were still smaller than 0.3 $\mu$m according to the theoretical estimation of the Young-Laplace model. Compared to the fluorinated PES membrane with the same pore diameter, the nanofilament-coated PES membranes raised the LEP by at least 16 fold. Considering the hydraulic pressure in the MD system, LEPs of all the nanofilament-coated PES membranes were well above the safety threshold, indicating their applicability in desalination.

To evaluate the membrane resistance to vapor transport, the gas permeation of PE and nanofilament-coated PES membranes under differing transmembrane pressures (see Detailed Experimental Procedures) was characterized. A linear dependence between gas permeation flux and transmembrane pressure difference was observed for both single-scale and multi-scale porous membranes (Fig. 2D). After coating with nanofilaments, the gas permeation flux of the NF-PES-8 membrane decreased by ~55% when compared to the uncoated one. Although the mass transfer barrier induced by the nano-porous outer layer is obvious, the large micro-porous paths inside the nanofilament-coated membrane guarantee an improvement in the overall gas permeability. The measurements demonstrated that the gas permeation flux of NF-PES-8 membrane was nearly 10 times above that of a commercial PE-0.2 membrane. Given the enhanced LEP shown above, the nanofilament-coated PES membranes successfully resolve the conflict in conventional MD membrane design. The concurrent enhancements of gas permeability and liquid wetting resistance demonstrate the superior performance of the present nanofilament-coated membrane compared to those reported previously (Seo et al. (2018), Nature Communications 9, 683; Wang et al. (2016), Environmental Science & Technology 50, 3866-3874; Deng et al. (2020), Journal of Membrane Science 598, 117813; Sun et al., (2019). Advanced Functional Materials 29, 1903125).

Durability

During MD desalination, membranes need to remain in contact with hot water for hours or days, which may affect the physical properties and surface chemistry of membranes. To evaluate possible degradation of membrane surfaces, polytetrafluroethylene (PTFE), PE, and nanofilament-coated PES-8 membranes were immersed in Milli-Q water at 80 °C for 3 to 48 hours. After drying the tested membranes under a nitrogen stream, the apparent receding contact angle $\theta_r^{app}$ for water and the contact angle hysteresis $\theta_{CAH}$ on the membrane surfaces was measured.

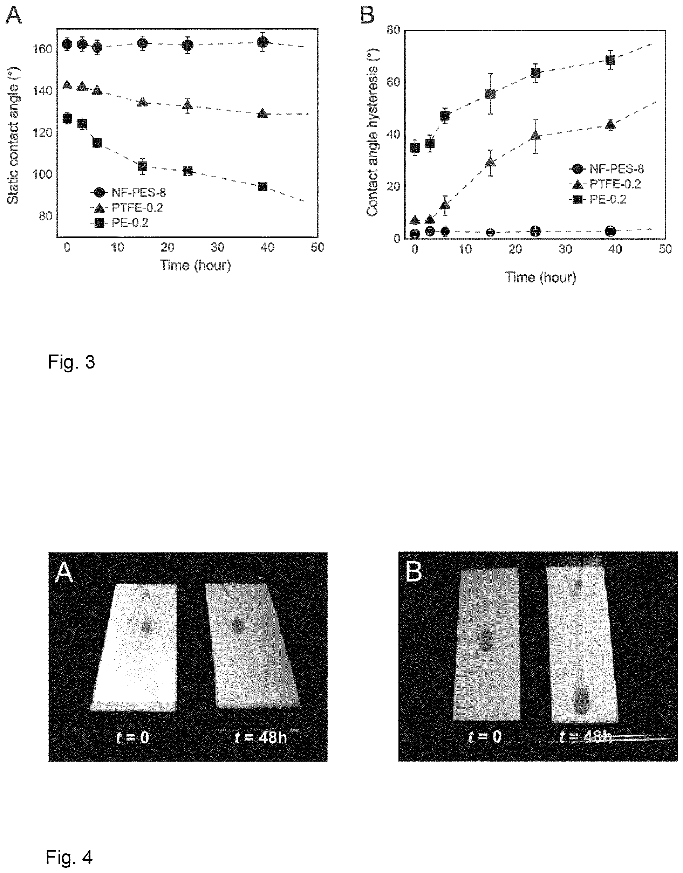

During the 48-hour hot immersion test, NF-PES-8 membranes maintained their super liquid-repellency with $\theta_r^{app}$ always greater than 155° and $\theta_{CAH}$ less than 5° (Fig. 3A, 3B). The snapshots in Fig. 4A present the droplet mobility on a NF-PES-8 membrane before and after the immersion test, respectively. Even when the NF-PES-8 membrane was immersed in hot water for 48 hours, water droplets still rolled off the surface rapidly, as was the case before the immersion test. This demonstrates the durable surface properties of nanofilament-coated membranes in long-term applications.

In contrast to this, the commercial PE and PTFE membranes showed significant deterioration.

After being immersed in hot water for 48 hours, $\theta_r^{app}$ on PE membranes declined from ~88° to ~24° and $\theta_{CAH}$ increased from ~35° to ~75°, indicating a considerable loss of liquid-repellency. Snapshots in Fig. 4B reflect the degradation of PE membranes after the immersion test. The water droplet was repelled on the original PE membrane, but it easily wetted and stained the membrane that was immersed for 48 hours. The degradation of the PE membrane can be attributed to the accelerated polymer oxidation in hot water, which generates polar groups on the PE surface and thus increases the surface energy.

The hydrophobicity also decreased on commercial PTFE membranes, although PTFE is widely considered to be thermally stable. After 48 hours in hot water, the $\theta_r^{app}$ on PTFE membranes decreased from ~130° to ~96° and $\theta_{CAH}$ increased from ~20° to ~50°. Based on previous studies of PTFE polymer and membranes, the inventors assume that the increasing hydrophilicity is mainly caused by the change in surface structure and polymer crystallinity at elevated temperatures. In the case of commercial micro-porous membranes, the loss of surface hydrophobicity could cause a gradual infiltration of liquid into membranes, decrease desalination efficiency, and even cause the contamination of the distillate by salty water.

The durable superhydrophobicity of NF-PES-8 membranes indicates that by reducing the wetted area on membrane surface, there is an effective way of retarding the polymer degradation in hot water. The fraction of the water contact area on membrane surfaces was estimated by analyzing the receding contact angle. For superhydrophobic arrays of cylindrical micropillars, the apparent receding contact angle ( $\theta_r^{app}$ ) can be expressed as

$$\cos \frac{\theta_{\mathrm{r}}^{\mathrm{app}}}{2} \approx (\pi \varphi_{\mathrm{ls}})^{1/2} \sin \theta_{\mathrm{r}} \qquad (2)$$

Here, $\theta_{\mathrm{r}}$ is the receding contact angle for water on a flat surface of same material as the membrane. The wetted area $\varphi_{\mathrm{ls}} = A_{\mathrm{ls}}/A_{\mathrm{w}}$ is the ratio of the projected area of liquid-solid interface ($A_{\mathrm{ls}}$) to the projected area of total wetted region ($A_{\mathrm{w}}$), and $\varphi_{\mathrm{lv}} = 1 - \varphi_{\mathrm{ls}}$ is the fractional area of the liquid-vapor interface.

By adopting such a specific geometrical model in eq. 2, the wetted area fractions on PE and NF-PES-8 membranes were estimated to be ~20% and ~1.5% at the beginning of the immersion test, respectively. An alternative approach is to take the liquid droplet in global thermodynamic equilibrium and apply the Cassie-Baxter equation to estimate the $\varphi_{\mathrm{ls}}$ surface fraction. In this case, the predicted $\varphi_{\mathrm{ls}}$ for PE and NF-PES-8 membranes were ~40% and ~5%, respectively. Whatever the approach, the extremely small wetted area $\varphi_{\mathrm{ls}}$ on the NF-PES-8 membrane explains its long-term thermal stability in the immersion test, and also implies a higher energy efficiency in desalination. This is because the heat loss by conduction between hot water and the membrane is greatly suppressed. The nanofilament coating also increases the water evaporation area on the membrane surface due to its superhydrophobic nature. As indicated by the measured $\theta_{\mathrm{r}}^{\mathrm{app}}$, the NF-PES-8 membrane kept a large fractional area of liquid-vapor interface with $\varphi_{\mathrm{lv}}$ = ~98.5% throughout the 48-hour test. In the theoretical analysis of the MD process, $\varphi_{\mathrm{lv}}$ is practically equivalent to the surface porosity ($\varepsilon$). Therefore, from Eq. 1 distillation flux (J) is proportional to $\varphi_{\mathrm{lv}}$, i.e., the large $\varphi_{\mathrm{lv}}$ on the NF-PES-8 membrane would lead to a substantial increase in the overall production of distillate.

**Table 1.** Characteristics of commercial membranes and nanofilament-coated PES membranes

| ID | Material | Nominal pore diameter ($\mu$m) | Liquid entry pressure (bar) | Receding contact angle (°) | Contact angle hysteresis (°) |
|---|---|---|---|---|---|
| PE-0.2 | | 0.2 | 6 $\pm$ 1.1 | 88 $\pm$ 3 | 35 $\pm$ 3 |
| PE-0.5 | | 0.5 | 1.65 $\pm$ 0.4 | 92 $\pm$ 2 | 41 $\pm$ 3 |
| PE-0.9 | PE | 0.9 | 1.07 $\pm$ 0.12 | 92 $\pm$ 3 | 32 $\pm$ 4 |
| PE-1.5 | | 1.5 | 0.45 $\pm$ 0.1 | 85 $\pm$ 3 | 35 $\pm$ 3 |
| PE-2.5 | | 2.5 | 0.4 $\pm$ 0.1 | 86 $\pm$ 2 | 39 $\pm$ 4 |
| PTFE-0.1 | PTFE | 0.1 | 6.5 $\pm$ 0.55 | 130 $\pm$ 2 | 19 $\pm$ 3 |
| PTFE-0.2 | | 0.2 | 5.05 $\pm$ 0.7 | 132 $\pm$ 1 | 17 $\pm$ 2 |
| NF-PES-0.1 | | 0.1 | >11.5 | 161 $\pm$ 3 | 2 $\pm$ 1 |
| NF-PES-1.2 | Nanofilament-coated PES | 1.2 | >11.5 | 159 $\pm$ 3 | 3 $\pm$ 1 |
| NF-PES-3 | | 3 | 6.5 $\pm$ 1.5 | 157 $\pm$ 2 | 4 $\pm$ 1 |
| NF-PES-5 | | 5 | 5.5 $\pm$ 1 | 158 $\pm$ 3 | 2 $\pm$ 1 |
| NF-PES-8 | | 8 | 5 $\pm$ 0.8 | 160 $\pm$ 4 | 3 $\pm$ 2 |

Detailed Experimental Procedures

***Contact angle measurements***

The water contact angles of all membranes (PE, PTFE, fluorinated PES and nanofilament-coated PES membranes) were measured to characterize the surface wettability. Contact angle and contact angle hysteresis of a water droplet were measured using a DataPhysics OCA35 goniometer. During the measurement, a 5 $\mu$l droplet was deposited on the membrane surface, and afterward 20 $\mu$l of water was added to and then removed from the droplet. The measurement was consecutively repeated three times at the same position, and at three different positions per substrate. The error of the advancing and receding contact angle measurements was estimated to be $\pm$2°.

***Liquid entry pressure (LEP) measurements***

To measure the LEP of membranes, a custom-designed apparatus was built. The tested membrane was mounted inside a filter holder, which connected to a syringe pump. By slowly pumping the salty water into the filter holder (0.1 mL/min), the hydrostatic pressure applied on the tested membrane gradually increased. The hydrostatic pressure was monitored using a pressure sensor (IPSLU-M12, RS-Pro) and the data was recorded using a data acquisition system (PCI 6251, National Instruments). Once the applied pressure exceeded the capillary pressure of the membrane pores, liquid penetrated the membranes, leading to a pressure drop. The obtained peak value of the pressure measurement gives the LEP of the tested membrane.

***Gas permeability measurements***

A gas permeability test was employed to analyze the mass transfer resistance of different membranes. The permeation flux of nitrogen through the dry membranes was measured under transmembrane pressures ranging from 10 to 1000 mbar. With increasing transmembrane pressure, the gas flow rate was obtained by using flow sensors with respective ranges (SMC Corp., PFMV5 series). The effective area of the tested membrane was 63 mm$^2$.

EXAMPLE 3

*Enhanced desalination via hierarchical porous membranes*

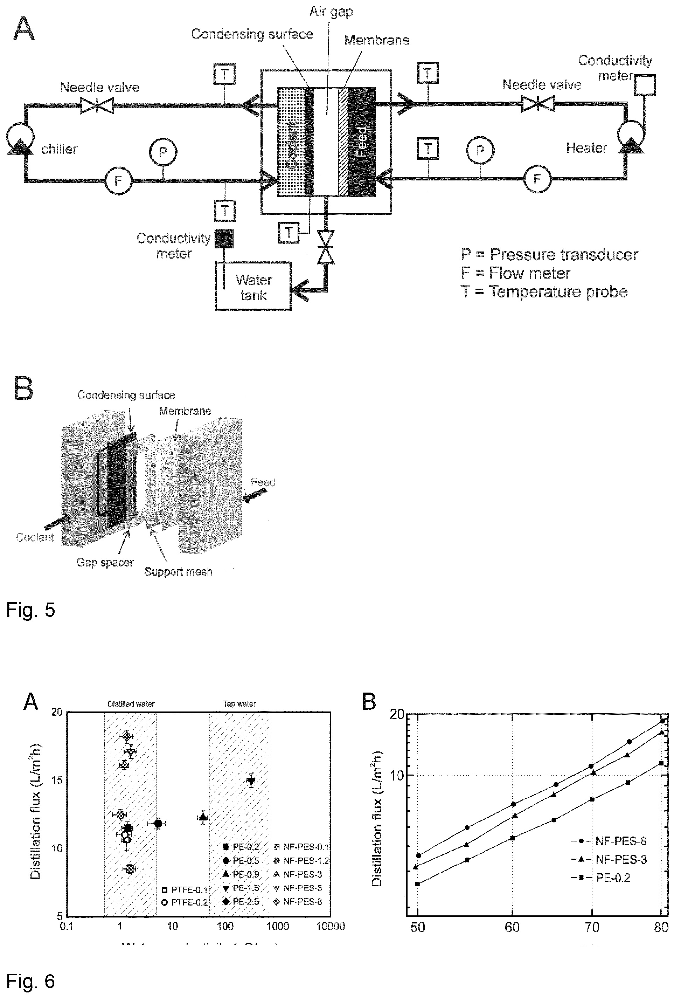

In order to demonstrate the technical potential of exemplary nanofilament-coated PES membranes in water desalination, membrane distillation (MD) experiments were conducted in a custom-made air gap membrane distillation (AGMD) system (Fig. 5A, 5B, see also Detailed in Experimental Procedures). As shown in the schematic drawing of the AGMD module, an air gap was introduced between the membrane and condensing surface, which prevented the membrane from coming into direct contact with the condensed water. The AGMD configuration reduce the conductive heat loss through the membrane, as well as permitting internal latent heat recovery when water condenses on the cooling surface. Owing to the improved thermal efficiency resulting from the air gap and heat recovery, the AGMD process has recently been considered as the first choice for pilot scale testing and future industrial applications.

In said AGMD experiments, nanofilament-coated PES membranes were tested at different feed water temperatures for more than 12 hours. The conductivity of saline feed water $\sigma_f$ in the MD test was stabilized at the level of seawater ($\sigma_f$ = 54.0 $\pm$ 0.5 mS/cm at 25 °C). The weight and conductivity of distillate $\sigma_d$ were continuously monitored over time to characterize the distillation flux and salt rejection rate in the desalination process. For comparison, MD performance of commercial PE and PTFE membranes were assessed as being the benchmark. In the following, PTFE-0.1 and PTFE-0.2 are used to denote the PTFE membranes with nominal pore diameters of $d_n$ = 0.1 and 0.2 $\mu$m, respectively.

Fig. 6A shows the measured flux and conductivity of distilled water for all tested membranes at a feed temperature of 80 °C and a cooling water temperature of 20°C. Flow rates of feed and cooling water were 1.5 and 2 Lmin$^{-1}$, respectively.

The inventors calculated the salt rejection rate by (1 - $\sigma_d/\sigma_f$) $\times$ 100%, where $\sigma_d$ and $\sigma_f$ are conductivity of distillate and feed, respectively. As commonly used membranes in the MD process, hydrophobic PE membranes were able to remove more than 99.9% salt from the feed saline (i.e., $\sigma_d$ < 54 $\mu$S/cm) when the pore diameter was below $d_n \leq 0.9$ $\mu$m. With the increasing pore size, the distillation flux of PE membranes goes up from 11.5 to 17.7 Lm$^{-2}$h$^{-1}$, but the water conductivity rises from 1.1 to 2721 $\mu$S/cm. The decline in salt rejection performance arises from the low wetting resistance of PE membranes with a large pore size (e.g., $d_n$ > 1.5 $\mu$m). Considering the standard conductivity of distilled water (0.5 - 3 $\mu$S/cm), only a PE-0.2 membrane conforms to the acceptance criteria.

In contrast, for all the nanofilament-coated PES membranes, the conductivity of purified water remained low and independent on the membrane pore size and distillation flux. Although the surface tension of feed water decreased from 0.07 N/m at 50 °C to 0.063 N/m at 80°C, the superhydrophobic nanofilament coating maintained high wetting resistance. Even when the nominal membrane pore size was 8 $\mu$m, the NF-PES-8 membrane performed with an excellent salt rejection (>99.995%). Given the substantial increase of distillation flux (18.2 Lm$^{-2}$h$^{-1}$), the hierarchical PES membrane shows significant advantages over the commercial membranes.

To further test the performance of various membranes under different environments, their desalination ability was determined at differing feed water temperatures.

Fig. 6B depicts the experimental steady state distillation flux as a function of feed water temperature for NF-PES-8, NF-PES-3 and PE-0.2 membranes. The temperature of the cooling water was kept at 20°C. All tested membranes showed an exponential increase in the distillation flux with increasing feed temperature. This is mainly due to the fact that the driving force of MD (i.e., water vapor pressure) rises exponentially with the feed water temperature ($T_f$). Notably, the NF-PES-8 membrane showed 16% higher increase of distillation flux compared to that of PE-0.2 membrane when $T_f$ increased from 50 to 80 °C. This variance in growth rate highlights that the hierarchical porous structure on NF-PES-8 membrane significantly enhances the vapor transport rate as a result of the higher gas permeability and the larger evaporation area.

Maximizing the thermal efficiency of water production is imperative to the future development and industrialization of MD in terms of the water-energy nexus. The thermal efficiency ($\eta$) of tested MD membranes, defined as the ratio of heat utilized for distillation to the total heat consumption at the feed side, is determined by = $q_d/q_f$. Here, $q_f$ is the total heat transfer rate through the membrane and $q_d$ is vaporization heat transfer rate associated with the distillation flux.

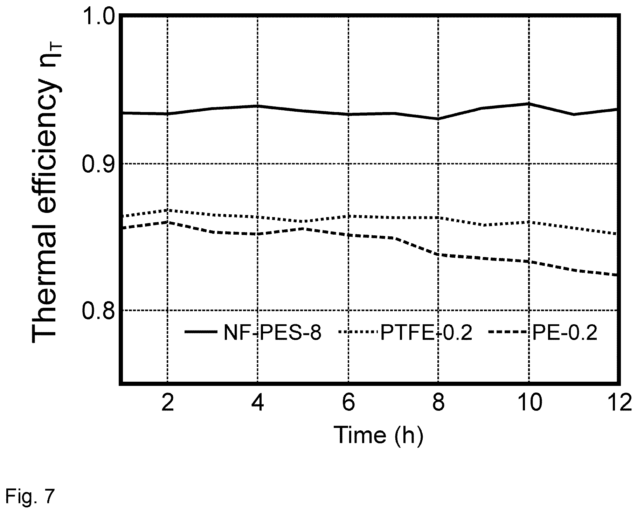

Fig. 7 illustrates the time evolution of thermal efficiency for the NF-PES-8, PE-0.2 and PTFE-0.2 membranes in 12-hour AGMD desalination. Temperatures of feed and cooling water were 80 and 20°C, respectively. Flow rates of feed and cooling water were 1.5 and 2 Lmin$^{-1}$, respectively. The error bands indicate the propagation of error associated with the fluid inlet and outlet temperatures, flow rate and distillate weight measurement.

As shown in Fig. 7, the commercial hydrophobic membranes (e.g., PTFE-0.2 and PE-0.2) were able to purify saline continuously, but with a gradual reduction in thermal efficiency from ~86% to ~82% over 12 hours. In comparison, the NF-PES-8 membrane demonstrated a higher and stable thermal efficiency with $\eta$ = ~93% over 12 hours under same testing conditions, significantly outperforming the PE-0.2 and PTFE-0.2 membranes in a long-term water desalination process.

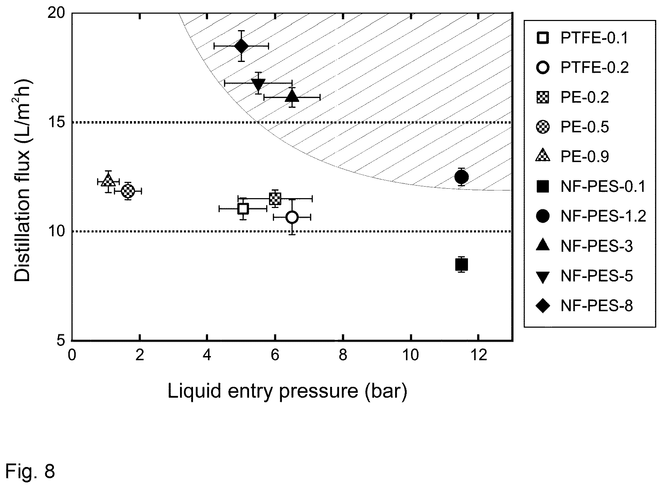

In order to clearly summarize membrane performance for water desalination, a selection of different membranes was rated in a diagram with the two most important parameters: LEP and distillation flux (Fig. 8). Since commercial installation necessitates a large desalination capacity with sufficient salt rejection, the membranes that simultaneously allow high wetting resistance and water production are ideal for the MD process, as highlighted by the hatched area in Fig. 8. With the advantages of multi-scale porous structures, the nanofilament-coated PES membranes apparently strike a better balance between the LEP and distillation flux, as compared to the commercial PE and PTFE membranes. In the most extreme case of the NF-PES-8 membrane, the distillation flux increased by 60% as compared to the commercially available PE-0.2 membrane. Note that despite relative lower distillation flux, the NF-PES-0.1 and NF-PES-1.2 membranes still show great potential for desalination in very harsh conditions. The ultra-high LEP ensures that the membranes are able to withstand extreme hydraulic pressures and will therefore be suitable for application with low-surface-tension fluids such as waste water, mixtures containing organic solvents or compounds, or aqueous solutions with surfactants.

Detailed experimental procedure for membrane distillation tests

Membrane distillation tests were performed using a custom-made AGMD setup, which consisted of AGMD module, feed water and coolant circulating loops, digital balance, conductivity meter, and data acquisition system. The tested membrane was mounted in the AGMD module, between a feed flow channel and a condensing surface. A support mesh (~0.5 mm thick) was used to hold the membrane in a planar shape and reduce the membrane deformation due to the pressure difference between feed flow and air gap. An acrylic spacer was used in the MD module to create the required air gap. The total air gap width between membrane and condensing surface was ~4.5 mm. Feed saline water was heated to the desired temperature and pumped to the AGMD module using a magnetic coupling water pump. The condensing surface temperature was controlled by the coolant flow loop using a refrigerated water bath circulator. When distilled water slid off the condensing surface by gravity, it was collected in a glass flask. A digital balance (SPX 2202, Ohaus) continuously recorded the weight of collected distilled water for determining the distillation flux of tested membranes. The conductivities of feed and distilled water were measured by the conductivity meter for calculating the salt rejection during membrane distillation. Four Pt100 temperature probes (PM-1/10-1/8-6-0-P-3, Omega) were adopted to measure the liquid temperature at inlet and outlet of feed flow channel and coolant flow channel, respectively. Two flow meters (FT110, Gems) and two pressure transducers (IPSLU-M12, RS-Pro) were installed in the pipelines to continuously monitor the flow rate and pressure in the feed and coolant loops. All the sensors in the AGMD testing setup were electrically connected to a data acquisition system, which consisted of two National Instruments (NI) analog input modules (PCI 6251 and NI-9216). The measured data during MD experiments were transferred to the computer, which could be monitored in real-time and stored using a self-written LabView code.

**Claims**

1. A nanofilament-coated membrane with hierarchical porous structures comprising

    - a microporous polymer support membrane having through-going pores with a nominal pore diameter, as determinable by capillary flow porometry according to ASTM F316-03(2019), in the range from 0.2 $\mu$m to 50 $\mu$m, preferably 1 $\mu$m to 10 $\mu$m
    - a superhydrophobic fluorine-free nanoporous layer having through-going pores with a nominal pore diameter, as determinable by SEM image analysis, in the range from 5 nm to 200 nm, preferably 10 nm to 100 nm, provided on said support membrane and consisting of a porous network of polysiloxane nanofilaments.

2. The nanofilament-coated porous membrane according to claim 1, wherein the microporous polymer support membrane has through-going pores with a nominal pore diameter in the range from 1 $\mu$m to 10 $\mu$m, and/or the

superhydrophobic fluorine-free nanoporous layer has through-going pores with a nominal pore diameter in the range from 10 nm to 100 nm.

3. The nanofilament-coated porous membrane according to claim 1 or 2, wherein the microporous support membrane comprises or consists of a polymer which is selected from the group consisting of polyethersulfone (PES), cellulose acetate (CA), polypropylene (PP), polyamide (nylon), polytetrafluoroethylene (PTFE), polyvinyl difluoride (PVDF) or polyethylene (PE).

4. The nanofilament-coated porous membrane according to any one of claims 1-3, which has an apparent receding contact angle $\theta_r^{app}$ for water of more than 150°, measured at room temperature, and a roll off angle of less than 10° even after being immersed in hot water of 80°C for 48 h.

5. The nanofilament-coated porous membrane according to any one of claims 1-4, which has a liquid entry pressure LEP of at least 2 bar, preferably at least 5 bar.

6. A method for preparing the nanofilament-coated porous membrane according to any one of claims 1-5, comprising at least the following steps:

- treatment of a microporous polymer membrane with oxygen plasma or by an oxidizing solution t to activate the polymer surface
- immersion of the microporous polymer membrane in a reaction medium comprising trichloromethylsilane or triethoxysilane, and trace amounts of water in a concentration of 100 ppm to saturation concentration, in an organic solvent for trichloromethylsilane or triethoxysilane that can accommodate the above trace amounts of water
- hydrolysis of trichloromethylsilane or triethoxysilane and generation of silanol functional groups
- formation of polysiloxane nanofilaments on said membrane surface due to condensation reactions of said silanol functional groups with each other and with hydroxyl groups on the membrane surface, and
- self-assembling of polysiloxane nanofilaments resulting in a porous network of said polysiloxane nanofilaments.

7. The method according to claim 6, wherein the oxidizing solution is Fenton's reagent.

8. The method according to claim 6 or 7, wherein the solvent is a mixture of n-heptane and toluene and the formation and self-assembling of nanofilaments is completed within a predetermined period of time, typically in the range from 10 min to 12 h.

9. Use of the nanofilament-coated porous membrane according to any one of claims 1-5 for membrane distillation.

10. The use according to claim 9 in a process of desalination of saline or distillation of contaminated water or extraction of water from waste water or extraction of other volatile components from a feed solution.

11. A method for extraction of a volatile component from a feed solution, comprising at least the following steps:

- providing a nanofilament-coated porous membrane according to any one claims of claims 1-5,
- contacting said membrane with a feed solution comprising a volatile component at a predetermined elevated temperature resulting in the evaporation and permeation of the volatile component through said nanofilament-coated porous membrane,
- condensing the permeated molecules at the opposite side of the membrane, wherein the condensation may occur directly into a stream of permeate contacting the membrane or onto a condensing surface having a predetermined low target temperature and being arranged opposite to said nanofilament-coated porous membrane in a predetermined distance, and
- collecting the condensed permeate.

12. The method according to claim 11, wherein the feed solution is a saline aqueous medium and the volatile component of said feed solution is water.

13. A device, in particular a membrane distillation device, comprising the nanofilament-coated porous membrane according to any one of claims 1-5.

**14.** The device according to claim 13, which is a membrane-distillation device and further comprises at least the following components:

- a supply compartment for receiving an aqueous supply medium with volatile components, and non-volatile compounds, which is in contact with one surface of the nanofilament-coated porous membrane,
- means for heating and maintaining the medium within the supply compartment at an elevated target temperature,
- a condensing surface maintained at a predetermined target temperature below the temperature of the supply compartment and arranged in a predetermined distance from that surface of the nanofilament-coated porous membrane which is not in contact with the supply compartment,
- means for cooling and maintaining the condensing surface at the target temperature, and
- means for collecting the distillate consisting of any volatile components of the supply medium which have permeated the nanofilament-coated porous membrane and condensed at the condensing surface.

**15.** The device according to claim 14, wherein the aqueous supply medium comprises a volatile component which is water, and a non-volatile compound which is a salt.

**Patentansprüche**

**1.** Nanofilament-beschichtete Membran mit hierarchischen porösen Strukturen, umfassend

- eine mikroporöse Polymerträgermembran mit durchgehenden Poren mit einem Poren-Nenndurchmesser, der durch eine Kapillarflussporosimetrie gemäß ASTM F316-03(2019) bestimmt werden kann, im Bereich von 0,2 $\mu$m bis 50 $\mu$m, vorzugsweise 1 $\mu$m bis 10 $\mu$m,
- eine superhydrophobe, fluorfreie nanoporöse Schicht mit durchgehenden Poren mit einem Poren-Nenndurchmesser, der durch eine SEM-Bildanalyse bestimmt werden kann, im Bereich von 5 nm bis 200 nm, vorzugsweise 10 nm bis 100 nm, die auf der Trägermembran bereitgestellt ist und aus einem porösen Netzwerk von Polysiloxan-Nanofilamenten besteht.

**2.** Nanofilament-beschichtete poröse Membran nach Anspruch 1, wobei die mikroporöse Polymerträgermembran durchgehende Poren mit einem Poren-Nenndurchmesser im Bereich von 1 $\mu$m bis 10 $\mu$m aufweist und/oder die superhydrophobe, fluorfreie nanoporöse Schicht durchgehende Poren mit einem Poren-Nenndurchmesser im Bereich von 10 nm bis 100 nm aufweist.

**3.** Nanofilament-beschichtete poröse Membran nach Anspruch 1 oder 2, wobei die mikroporöse Trägermembran ein Polymer umfasst oder aus diesem besteht, das aus der Gruppe, bestehend aus Polyethersulfon (PES), Celluloseacetat (CA), Polypropylen (PP), Polyamid (Nylon), Polytetrafluorethylen (PTFE), Polyvinyldifluorid (PVDF) oder Polyethylen (PE), ausgewählt ist.

**4.** Nanofilament-beschichtete poröse Membran nach einem der Ansprüche 1 bis 3, die einen scheinbaren zurückweichenden Kontaktwinkel $\theta_r^{app}$ für Wasser von mehr als 150°, gemessen bei Raumtemperatur, und einen Abrollwinkel von weniger als 10° selbst nach dem Eintauchen in heißes Wasser von 80 °C für 48 Stunden aufweist.

**5.** Nanofilament-beschichtete poröse Membran nach einem der Ansprüche 1 bis 4, die einen Flüssigkeitseintrittsdruck LEP von mindestens 2 bar, vorzugsweise mindestens 5 bar, aufweist.

**6.** Verfahren zur Herstellung der Nanofilament-beschichteten porösen Membran nach einem der Ansprüche 1 bis 5, das mindestens die folgenden Schritte umfasst:

- Behandlung einer mikroporösen Polymermembran mit Sauerstoffplasma oder durch eine oxidierende Lösung zum Aktivieren der Polymeroberfläche,
- Eintauchen der mikroporösen Polymermembran in ein Reaktionsmedium, das Trichlormethylsilan oder Triethoxysilan und Spurenmengen von Wasser in einer Konzentration von 100 ppm bis zur Sättigungskonzentration in einem organischen Lösungsmittel für Trichlormethylsilan oder Triethoxysilan, das die vorstehenden Spurenmengen von Wasser aufnehmen kann, umfasst,
- Hydrolyse von Trichlormethylsilan oder Triethoxysilan und Erzeugen von funktionellen Silanolgruppen,
- Bildung von Polysiloxan-Nanofilamenten auf der Membranoberfläche aufgrund von Kondensationsreaktionen der funktionellen Silanolgruppen miteinander und mit Hydroxylgruppen auf der Membranoberfläche, und
- Selbstorganisieren von Polysiloxan-Nanofilamenten, das zu einem porösen Netzwerk der Polysiloxan-Nanofilamente führt.

7.  Verfahren nach Anspruch 6, wobei die oxidierende Lösung Fenton's Reagenz ist.

8.  Verfahren nach Anspruch 6 oder 7, wobei das Lösungsmittel ein Gemisch aus n-Heptan und Toluol ist und die Bildung und das Selbstorganisieren von Nanofilamenten innerhalb eines vorgegebenen Zeitraums, typischerweise im Bereich von 10 min bis 12 Stunden, abgeschlossen ist.

9.  Verwendung der Nanofilament-beschichteten porösen Membran nach einem der Ansprüche 1 bis 5 zur Membrandestillation.

10. Verwendung nach Anspruch 9 in einem Verfahren der Entsalzung von Kochsalzlösung oder der Destillation von verunreinigtem Wasser oder der Extraktion von Wasser aus Abwasser oder der Extraktion anderer flüchtiger Bestandteile aus einer Beschickungslösung.

11. Verfahren zur Extraktion eines flüchtigen Bestandteils aus einer Beschickungslösung, umfassend mindestens die folgenden Schritte:

    - Bereitstellen einer Nanofilament-beschichteten porösen Membran nach einem der Ansprüche 1 bis 5,
    - Inkontaktbringen der Membran mit einer Beschickungslösung, die einen flüchtigen Bestandteil umfasst, bei einer vorgegebenen erhöhten Temperatur, was zum Verdampfen und zum Hindurchtreten des flüchtigen Bestandteils durch die Nanofilament-beschichtete poröse Membran führt,
    - Kondensieren der hindurchgetretenen Moleküle an der gegenüberliegenden Seite der Membran, wobei die Kondensation direkt in einen Strom von Permeat, der die Membran kontaktiert, oder auf eine Kondensationsoberfläche mit einer vorgegebenen niedrigen Zieltemperatur und die gegenüber der Nanofilament-beschichteten porösen Membran in einem vorgegebenen Abstand angeordnet ist, stattfinden kann, und
    - Sammeln des kondensierten Permeats.

12. Verfahren nach Anspruch 11, wobei die Beschickungslösung ein wässriges Kochsalzlösungsmedium ist und der flüchtige Bestandteil der Beschickungslösung Wasser ist.

13. Vorrichtung, insbesondere eine Membrandestillationsvorrichtung, welche die Nanofilament-beschichtete poröse Membran nach einem der Ansprüche 1 bis 5 umfasst.

14. Vorrichtung nach Anspruch 13, die eine Membrandestillationsvorrichtung ist und ferner mindestens die folgenden Bestandteile umfasst:

    - einen Zuführungsraum zum Aufnehmen eines wässrigen Zuführungsmediums mit flüchtigen Bestandteilen und nicht-flüchtigen Verbindungen, der mit einer Oberfläche der Nanofilament-beschichteten porösen Membran in Kontakt ist,
    - Mittel zum Erwärmen und Halten des Mediums innerhalb des Zuführungsraums bei einer erhöhten Zieltemperatur,
    - eine Kondensationsoberfläche, die bei einer vorgegebenen Zieltemperatur unterhalb der Temperatur des Zuführungsraums gehalten wird und in einem vorgegebenen Abstand von derjenigen Oberfläche der Nanofilament-beschichteten porösen Membran gehalten wird, die nicht mit dem Zuführungsraum in Kontakt ist,
    - Mittel zum Kühlen und Halten der Kondensationsoberfläche bei der Zieltemperatur, und
    - Mittel zum Sammeln des Destillats, das aus jedweden flüchtigen Bestandteilen des Zuführungsmediums besteht, die durch die Nanofilament-beschichtete poröse Membran hindurchgetreten und an der Kondensationsoberfläche kondensiert sind.

15. Vorrichtung nach Anspruch 14, wobei das wässrige Zuführungsmedium einen flüchtigen Bestandteil, der Wasser ist, und eine nicht-flüchtige Verbindung, die ein Salz ist, umfasst.

## Revendications

1. Membrane revêtue de nanofilaments avec des structures poreuses hiérarchiques comprenant

   - une membrane de support polymère microporeuse présentant des pores traversants d'un diamètre de pore nominal, tel que déterminé par porométrie par écoulement capillaire selon la norme ASTM F316-03(2019), dans la plage de 0,2 $\mu$m à 50 $\mu$m, de préférence de 1 $\mu$m à 10 $\mu$m,
   - une couche nanoporeuse exempte de fluor superhydrophobe présentant des pores traversants d'un diamètre de pore nominal, tel que déterminé par analyse d'image MEB, dans une plage de 5 nm à 200 nm, de préférence de 10 nm à 100 nm, disposée sur ladite membrane de support et constituée d'un réseau poreux de nanofilaments de polysiloxane.

2. Membrane poreuse revêtue de nanofilaments selon la revendication 1, dans laquelle la membrane de support polymère microporeuse présente des pores traversants d'un diamètre de pore nominal dans la plage de 1 $\mu$m à 10 $\mu$m, et/ou la couche nanoporeuse exempte de fluor superhydrophobe présente des pores traversants d'un diamètre de pore nominal dans la plage de 10 nm à 100 nm.

3. Membrane poreuse revêtue de nanofilaments selon la revendication 1 ou 2, dans laquelle la membrane de support microporeuse comprend ou est constituée d'un polymère qui est choisi parmi le groupe constitué de polyéthersulfone (PES), d'acétate de cellulose (CA), de polypropylène (PP), de polyamide (nylon), de polytétrafluoroéthylène (PTFE), de polyfluorure de vinyle (PVDF) ou de polyéthylène (PE).

4. Membrane poreuse revêtue de nanofilaments selon l'une quelconque des revendications 1 à 3, qui présente un angle de contact apparent en retrait $\theta_r^{app}$ pour l'eau supérieur à 150°, mesuré à température ambiante, et un angle de roulement inférieur à 10° même après immersion dans de l'eau chaude à 80 °C pendant 48 h.

5. Membrane poreuse revêtue de nanofilaments selon l'une des revendications 1 à 4, qui présente une pression d'entrée de liquide (LEP) d'au moins 2 bars, de préférence d'au moins 5 bars.

6. Procédé de préparation de la membrane poreuse revêtue de nanofilaments selon l'une quelconque des revendications 1 à 5, comprenant au moins les étapes suivantes :

   - le traitement d'une membrane polymère microporeuse par plasma d'oxygène ou par une solution oxydante t pour activer la surface polymère,
   - l'immersion de la membrane polymère microporeuse dans un milieu réactionnel comprenant du trichlorométhylsilane ou du triéthoxysilane, et des traces d'eau à une concentration de 100 ppm jusqu'à saturation, dans un solvant organique pour le trichlorométhylsilane ou le triéthoxysilane qui peut accueillir les traces d'eau ci-dessus,
   - l'hydrolyse du trichlorométhylsilane ou du triéthoxysilane et la génération de groupes fonctionnels silanol.
   - la formation de nanofilaments de polysiloxane sur la surface de ladite membrane en raison des réactions de condensation entre les groupes fonctionnels silanol et avec les groupes hydroxyles sur la surface de la membrane, et
   - l'auto-assemblage de nanofilaments de polysiloxane entraînant un réseau poreux desdits nanofilaments de polysiloxane.

7. Procédé selon la revendication 6, dans lequel la solution oxydante est un réactif de Fenton.

8. Procédé selon la revendication 6 ou 7, dans lequel le solvant est un mélange de n-heptane et de toluène, et la formation et l'auto-assemblage des nanofilaments s'achèvent dans un délai prédéterminé, typiquement dans la plage de 10 minutes à 12 heures.

9. Utilisation de la membrane poreuse recouverte de nanofilaments selon l'une quelconque des revendications 1 à 5 pour la distillation sur membrane.

10. Utilisation selon la revendication 9 dans un processus de dessalement de solution saline, de distillation d'eau contaminée, d'extraction d'eau à partir d'eaux usées ou d'extraction d'autres composants volatils à partir d'une solution d'alimentation.

11. Procédé d'extraction d'un composant volatil à partir d'une solution d'alimentation, comprenant au moins les étapes suivantes :

- la fourniture d'une membrane poreuse revêtue de nanofilaments selon l'une quelconque des revendications 1 à 5,
- la mise en contact de ladite membrane avec une solution d'alimentation contenant un composant volatil à une température élevée prédéterminée, entraînant l'évaporation et la perméation du composant volatil à travers ladite membrane poreuse revêtue de nanofilaments,
- la condensation des molécules perméées au niveau du côté opposé de la membrane, dans lequel la condensation peut se produire directement dans un flux de perméat en contact avec la membrane ou sur une surface de condensation présentant une température cible basse prédéterminée et qui est agencée en face de ladite membrane poreuse revêtue de nanofilaments à une distance prédéterminée, et
- la collecte du perméat condensé.

12. Procédé selon la revendication 11, dans lequel la solution d'alimentation est un milieu aqueux salin et le composant volatil de ladite solution d'alimentation est de l'eau.

13. Dispositif, en particulier un dispositif de distillation sur membrane, comprenant la membrane poreuse revêtue de nanofilaments selon l'une quelconque des revendications 1 à 5.

14. Dispositif selon la revendication 13, qui est un dispositif de distillation sur membrane et comprend en outre au moins les composants suivants :

- un compartiment de fourniture destiné à recevoir un milieu de fourniture aqueux contenant des composants volatils et des composés non volatils, qui est en contact avec une surface de la membrane poreuse revêtue de nanofilaments,
- des moyens de chauffage et de maintien de la température du milieu à l'intérieur du compartiment de fourniture à une température cible élevée,
- une surface de condensation maintenue à une température cible prédéterminée inférieure à la température du compartiment de fourniture et agencée à une distance prédéterminée de la surface de la membrane poreuse recouverte de nanofilaments qui n'est pas en contact avec le compartiment de fourniture,
- des moyens de refroidissement et de maintien de la surface de condensation à la température cible, et
- des moyens de collecte du distillat constitué de quelconques composants volatils du milieu de fourniture qui a perméé la membrane poreuse revêtue de nanofilaments et condensé au niveau de la surface de condensation.

15. Dispositif selon la revendication 14, dans lequel le milieu de fourniture aqueux comprend un composant volatil, à savoir de l'eau, et un composé non volatil, à savoir un sel.

Fig. 1

Fig. 2

Fig. 3

Fig. 4

Fig. 5

Fig. 6

Fig. 7

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013074040 A

**Non-patent literature cited in the description**

- **GONZALEZ** ; **SUAREZ**. *Renewable and Sustainable Energy Reviews*, 2017, vol. 80, 238-259
- **ALI et al.** *Renewable and Sustainable Energy Reviews*, 2018, vol. 81, 1-21
- **DESMUKK et al.** *Energy & Environmental Science*, 2018, vol. 11, 1177-1196
- **HUSSAIN et al.** *Emergent Materials*, 2021, https://doi.org/10.1007/s42247-020-00152-8
- **JIANG et al.** *ACS Nano*, 2020, vol. 14, 17376-17386
- **SEO et al.** *Nature Communications*, 2018, vol. 9, 683
- **WANG et al.** *Environmental Science & Technology*, 2016, vol. 50, 3866-3874
- **DENG et al.** *Journal of Membrane Science*, 2020, vol. 598, 117813
- **SUN et al.** *Advanced Functional Materials*, 2019, vol. 29, 1903125